**Europäisches Patentamt**

**European Patent Office**

**Office européen des brevets**

(19)

(11) Veröffentlichungsnummer: **0 163 964**
**B1**

(12) **EUROPÄISCHE PATENTSCHRIFT**

(45) Veröffentlichungstag der Patentschrift:
07.01.88

(51) Int. Cl.⁴: **H 01 G 4/38**

(21) Anmeldenummer: 85105519.4

(22) Anmeldetag: 06.05.85

(54) Elektrischer Wickelkondensator mit innerer Reihenschaltung.

(30) Priorität: 21.05.84 DE 3418901

(43) Veröffentlichungstag der Anmeldung:
11.12.85 Patentblatt 85/50

(45) Bekanntmachung des Hinweises auf die Patenterteilung:
07.01.88 Patentblatt 88/1

(84) Benannte Vertragsstaaten:
DE FR GB IT SE

(56) Entgegenhaltungen:
GB - A - 884 927
LU - A - 67 652

(73) Patentinhaber: Siemens Aktiengesellschaft Berlin und München, Wittelsbacherplatz 2, D-8000 München 2 (DE)

(72) Erfinder: Fetzer, Jürgen, Dipl.-Phys., Mühlstrasse 19, D-7929 Dettingen (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft einen elektrischen Wickelkondensator mit innerer Reihenschaltung, insbesondere einen periodisch stossartig auf- und entladbaren Glättungs- und Stützkondensator, der aus aufgewickelten Papierbändern besteht, die mit regenerierfähig dünnen Metallschichten versehen sind, wobei zwei durch einen Freistreifen voneinander getrennte Metallschichten auf einem Papierband über Stirnkontaktschichten mit den Elektrodenzuleitungen kontaktiert sind und ein weiteres Papierband eine Metallschicht aufweist, die nicht mit den Stirnkontaktschichten verbunden ist, und bei dem ggf. weitere nicht metallisierte Beilaufpapierbänder mit verwickelt sind.

Derartige Kondensatoren werden zum Glätten pulsierender Gleichspannungen verwendet, wobei Stützkondensatoren bei periodischem Spitzenstrombedarf kurzzeitig hohe Ströme abgeben können und so ein Gleichspannungsnetz unterstützen.

Die genannten Kondensatoren werden insbesondere in der Leistungselektronik eingesetzt und weisen Nennspannungen $\geqslant$ 3 kV auf. Damit solche Kondensatoren mit guter Betriebssicherheit bei Überspannung eingesetzt werden können, verwendet man die innere Reihenschaltung. Hierbei wird ein Papierband, das zwei durch einen Freistreifen voneinander getrennte Metallschichten besitzt, als kontaktierte Elektrode eingesetzt, wobei die Verbindung zu den äusseren Elektrodenanschlüssen über Stirnkontakt (Schoop)-Schichten erfolgt. Ein weiteres Papierband ist mit einer Metallschicht versehen, die nicht mit den Schoopschichten verbunden ist. Gegebenenfalls können nicht metallisierte Papierbänder mitverwickelt werden, die als Beilaufpapier bezeichnet werden.

Eine Schwachstelle der inneren Reihenschaltung sind die Schnittkanten der kontaktierten Elektrode mit Freistreifen am Wickelanfang und -ende. Bei betriebsbedingten Überspannungen fällt der Kondensatorwickel hier durch Überzünden von Belagkante zu Belagkante am Freistreifen aus. Dies wird dadurch hervorgerufen, dass am Wickelanfang und -ende die Feldlinien durch einen, ggf. mit einem Imprägniermittel gefüllten, Spalt von der Dicke einer Dielektrikumslage führen. Da hier die Isolation geringer als diejenige des Kondensatorpapiers ist, wird das Überzünden von Belagkante zu Belagkante erleichtert.

Es ist zwar möglich, durch Anwendung einer hochfrequenten Spannung die Metallschichten am Wickelanfang und -ende abzubrennen, wodurch eine belagfreie Fläche entsteht. Dieses Verfahren ist allerdings zeitaufwendig und benötigt teure Investitionen an der Wickelmaschine. Weiterhin besteht die Gefahr, dass das Kondensatorpapier durch Durchschläge beim Abbrennen beschädigt wird.

Weiterhin würde auch die Möglichkeit bestehen, das Überzünden durch Verbreiterung des Freistreifens zu erschweren. Hierdurch würde sich jedoch die Kapazität des Kondensatorwickels vermindern.

Aufgabe der Erfindung ist es, einen elektrischen Wickelkondensator mit innerer Reihenschaltung anzugeben, der bei betriebbedingten Überspannungen kein Überzünden von Belagkante zu Belagkante am Freistreifen aufweist.

Diese Aufgabe wird erfindungsgemäss dadurch gelöst, dass das mit den Stirnkontaktschichten verbundene Papierband am Wickelanfang und -ende im Bereich des Freistreifens einen Anschnitt besitzt, so dass die elektrischen Feldlinien im Bereich des Anschnitts grösstenteils durch das Papierband verlaufen.

Der Anschnitt ist bervorzugt stufen- oder pfeilförmig.

Vorteilhafte Ausgestaltungen der Erfindung bestehen darin, dass der Spitzenwinkel des Pfeilanschnitts kleiner oder gleich 90° ist, wobei der Pfeilanschnitt vorzugsweise symmetrisch angeordnet ist.

Der Anschnitt kann eine gerade oder eine geschweifte Form aufweisen.

Die Vorteile eines Kondensators nach der Erfindung werden anhand der folgenden Ausführungsbeispiele näher erläutert.

In der dazugehörenden Zeichnung zeigen

Fig. 1 und 2 einen Teilausschnitt eines herkömmlichen Kondensatorwickels in Drauf- und Seitenansicht,

Fig. 3 eine Draufsicht auf einen Teilausschnitt eines Kondensators mit stufenförmigem Anschnitt,

Fig. 4 und 5 die Drauf- und Seitenansicht eines Kondensators mit pfeilförmigem Anschnitt.

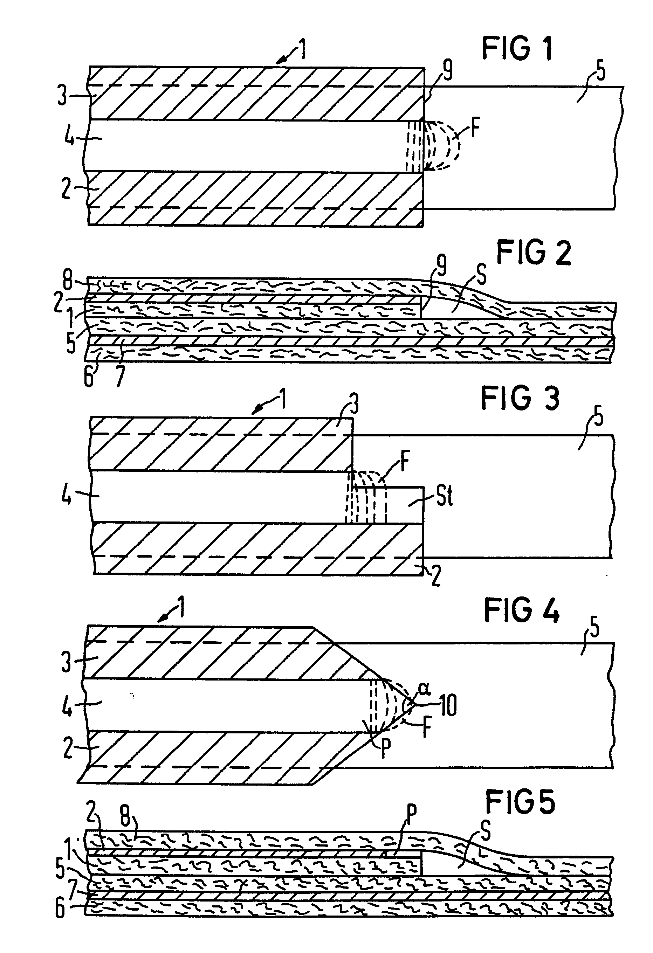

In der Fig. 1 ist die Draufsicht auf ein Papierband 1 dargestellt, das an seinen beiden Längsseiten regenerierfähig dünne Metallschichten 2, 3, beispielsweise aus Zink besitzt. Die beiden Metallschichten 2, 3 sind durch einen Freistreifen 4 voneinander getrennt. Die Breite des Freistreifens 4 hängt von der Nennspannung des Kondensators ab.

Weiterhin ist in der Fig. 1 ein nichtmetallisiertes Beilaufpapier 5 zu erkennen, dass unterhalb des Papierbandes 1 angeordnet ist. Die Metallschichten 2 und 3 sind mit in der Figur nicht dargestellten Stirnkontaktschichten verbunden, an denen, in der Figur ebenfalls nicht dargestellte, äussere Anschlüsse angebracht sind.

Das als kontaktierte Elektrode verwendete Papierband 1 weist eine gerade Schnittkante 9 auf. Der Verlauf der elektrischen Feldlinien F im Bereich der Schnittkante 9 ist in der Fig. 1 eingezeichnet.

In der Fig. 2 ist eine Seitenansicht dargestellt, bei der über dem Papierband 1 ein nichtmetallisiertes Beilaufpapier 8 angeordnet ist. Die Metallschicht 7 der inneren Reihenschaltung, die nicht mit den Stirnkontaktschichten verbunden ist, befindet sich auf einem weiteren Papierband 6. In der Fig. 2 ist zu erkennen, dass im Bereich der Schnittkante 9 beim Wickeln ein Spalt S entsteht, der beispielsweise mit einem Hartwachs-Öl gefüllt sein kann. Aus den Fig. 1 und 2 ist ersichtlich, dass die elektrischen Feldlinien F zwischen den Metallschichten 2 und 3 neben der Schnittkante 9 auf nur wenig längeren Bahnen auch durch den Imprägnierspalt S verlaufen. Auch wenn der Spalt S mit einem Hartwachs-Öl-Gemisch gefüllt ist, ist die Isolation an dieser Stelle wesentlich schlechter als die des Papierbandes 1 (Faktor ca. 3). Die Schnittkante 9 wird somit zu einer bevorzugten Stelle für Ladungsträgerbrücken und ein Überzünden zwischen den Metallschichten 2 und 3 wird begünstigt.

Die Fig. 3 zeigt einen Kondensator bei dem das Papierband 1 im Bereich des Freistreifens 4 einen stufenförmigen Anschnitt St aufweist. Der Verlauf der Feldlinien F zwischen den Metallschichten 2 und 3 zeigt, dass der Isolationsweg wesentlich vergrössert ist, da die Feldlinien F grösstenteils nicht mehr durch den Spalt, sondern durch das Papierband verlaufen. Wie der Fig.3 zu entnehmen ist, wird die grösste Wirkung erzielt, wenn der stufenförmige Anschnitt St mit einer Metallisierungskante abschliesst.

In den Fig. 4 und 5 ist ein Kondensator gemäss der Erfindung dargestellt. In der Fig. 4 ist zu erkennen, dass das Papierband 1 einen Pfeilanschnitt P am Folienangang und — in der Figur nicht dargestellt — am Folienende aufweist. Der Verlauf der elektrischen Feldlinien F zwischen den Metallschichten 2 und 3 im Bereich des Pfeilanschnittes P ist in der Fig. 4 dargestellt. Durch das vorstehende Papier des Freistreifens 4 verlaufen die Feldlinien F bis zur Pfeilspitze 10 mindestens zum Teil durch das Dielektrikum.

Erst ab dem Punkt 10 laufen sie dann ebenfalls nur durch den Imprägnierspalt. Der Weg der Feldlinien ist dann allerdings mindestens 1,5mal länger als die Breite des Freistreifens 4.

Durch den Pfeilanschnitt P erfolgt somit im Bereich der Schnittkante eine scheinbare Verbreiterung des Freistreifens 4, wodurch ein Überzünden zwischen den Metallschichten 2 und 3 in sicherer Weise verhindert wird, ohne dass die Kapazität des Kondensators durch einen breiteren Freistreifen vermindert würde.

Der Winkel $\alpha$ an der Spitze 10 des Pfeilanschnittes P ist vorteilhafterweise kleiner oder gleich 90°. Der Pfeilanschnitt P ist bevorzugterweise symmetrisch angeordnet, so dass die Spitze 10 auf der Mittelachse des Papierbandes 1 liegt.

Versuche an mehr als 60 Kondensatoren haben ergeben, dass kein Kondensator bei Überspannung durch Überzünden zwischen den Metallschichten 2 und 3 an der Pfeilanschnittstelle P ausgefallen war.

## Patentansprüche

1. Elektrischer Wickelkondensator mit innerer Reihenschaltung, insbesondere periodisch stossartig auf- und entladbarer Glättungs- und Stützkondensator, der aus aufgewickelten Papierbändern besteht, die mit regenerierfähig dünnen Metallschichten versehen sind, wobei zwei durch einen Freistreifen voneinander getrennte Metallschichten auf einem Papierband über Stirnkontaktschichten mit den Elektrodenzuleitungen kontaktiert sind und ein weiteres Papierband eine Metallschicht aufweist, die nicht mit den Stirnkontaktschichten verbunden ist, und bei dem ggf. weitere nichtmetallisierte Beilaufpapierbänder mitverwickelt sind, dadurch gekennzeichnet, dass das mit den Stirnkontaktschichten verbundene Papierband (1) am Wickelanfang und -ende einen Anschnitt im Bereich des Freistreifens (4) besitzt, so dass die elektrischen Feldlinien im Bereich des Anschnitts grösstenteils durch das Papierband verlaufen.

2. Elektrischer Wickelkondensator nach Anspruch 1, dadurch gekennzeichnet, dass der Anschnitt stufenförmig ist.

3. Elektrischer Wickelkondensator nach Anspruch 1, dadurch gekennzeichnet, dass der Anschnitt pfeilförmig (P) ist.

4. Elektrischer Wickelkondensator nach Anspruch 3, dadurch gekennzeichnet, dass der Spitzenwinkel ($\alpha$) des Pfeilanschnitts (P) kleiner oder gleich 90° ist.

5. Elektrischer Wickelkondensator nach Anspruch 3 oder 4, dadurch gekennzeichnet, dass der Pfeilanschnitt (P) symmetrisch angeordnet ist.

6. Elektrischer Wickelkondensator nach einem der Ansprüche 1 bis 5, dadurch gekennzeichnet, dass der Anschnitt eine gerade Form besitzt.

7. Elektrischer Wickelkondensator nach einem der Ansprüche 1 bis 5, dadurch gekennzeichnet, dass der Anschnitt eine geschweifte Form besitzt.

## Claims

1. An electrical wound capacitor with an internal series coupling, in particular, but not exclusively, a smoothing- and support capacitor which can periodically be suddenly charged and discharged and which consists of wound paper tapes which are provided with regenerably thin metal layers, where two metal layers on a paper tape, which are separated from one another by an uncovered strip, are contacted by way of end contact layers with the electrode supply lines, and a further paper tape is provided with a metal layer which is not connected to the end-contact layers, and where further, non-metallised auxiliary paper tapes are wound in addition, characterised in that at the start and the end of the winding, the paper tape (1) which is connected to the end-contact layers is provided with a notch in the region of the uncovered strip (4) so that the electric field lines in the region of the notch pass mainly through the paper tape.

2. An eletrical wound capacitor as claimed in Claim 1, characterised in that the notch is step-shaped.

3. An eletrical wound capacitor as claimed in Claim 1, characterised in that the notch is arrow-shaped (P).

4. An eletrical wound capacitor as claimed in Claim 3, characterised in that the apial angle ($\alpha$) of the arrow-shaped notch (P) is less than or equal to 90°.

5. An eletrical wound capacitor as claimed in Claim 3 or 4, characterised in that the arrow-shaped notch(P) is symmetrically arranged.

6. An eletrical wound capacitor as claimed in one of Claims 1 to 5, characterised in that the notch has a straight shape.

7. An eletrical wound capacitor as claimed in one of Claims 1 to 5, characterised in that the notch has a curved shape.

## Revendications

1. Condensateur électrique bobiné comportant un couplage série interne, en particulier condensateur de lissage et de soutien chargeable et déchargeable périodiquement de façon brusque, qui est constitué de bandes de papier enroulées portant de minces couches métalliques susceptibles d'être régénérées, deux couches métalliques séparées par une zone longitudinale libre ou marge sur une bande de papier étant mises en contact avec les connexions des électrodes par des couches de contact d'extrémité et une autre bande de papier présentant une couche métallique qui n'est pas reliée aux couches de contact d'extrémité, et dans lequel d'autres bandes de papier, dit de bourrage, non métallisées, sont éventuellement enroulées en même temps, caractérisé en ce que la bande de papier (1) reliée aux couches de contact d'extrémité est coupée, au début et à la fin de l'enroulement, dans la zone de la marge (4), de manière que les lignes de champ électrique dans la zone de l'extrémité coupée passent en majeure partie par la bande de papier.

2. Condensateur selon la revendication 1, caractérisé en ce que l'extrémité coupée est en forme de gradin.

3. Condensateur selon la revendication 1, caractérisé en ce que l'extrémité coupée est en forme de flèche (P).

4. Condensateur selon la revendication 3, caractérisé en ce que l'angle (α) de la pointe de l'extrémité coupée en forme de flèche (P) est inférieur ou égal à 90°.

5. Condensateur selon la revendication 3 ou 4, caractérisé en ce que l'extrémité coupée en forme de flèche (P) est disposée symétriquement.

6. Condensateur selon une des revendications 1 à 5, caractérisé en ce que l'extrémité coupée possède une forme droite.

7. Condensateur selon une des revendications 1 à 5, caractérisé en ce que l'extrémité coupée possède une forme courbe.

## FIG 1

## FIG 2

## FIG 3

## FIG 4

## FIG 5